# EUROPÄISCHE PATENTANMELDUNG

(11) **EP 2 792 544 A2**
(43) Veröffentlichungstag der Anmeldung: **22.10.2014**
(21) Anmeldenummer: 14001382.2
(22) Anmeldetag: 16.04.2014
(51) Int. Cl.: B60P 3/34

(54) **Wetterschutzdach**

(30) Priorität: 16.04.2013 DE 102013006525; 30.11.2013 DE 102013018014
(71) Anmelder: Ensenmeier, Knuth, 86391 Stadtbergen (DE)
(72) Erfinder: Ensenmeier, Knuth, 86391 Stadtbergen (DE)
(74) Vertreter: Prünte, Peter

(57) **Zusammenfassung**

Ein an einem mit Flügeltüren (7) ausgestatteten Kraftfahrzeug (13) angebrachtes oder anbringbares Wetterschutzdach (1) mit einer Dachfläche ist dadurch gekennzeichnet, dass das Wetterschutzdach (1) zwischen den aufgeklappten Flügeltüren (7) aufspannbar ist.

## Beschreibung

Die Erfindung bezieht auf ein an einem mit Flügeltüren ausgestatteten Kraftfahrzeug angebrachtes oder anbringbares Wetterschutzdach mit einer Dachfläche.

Aus DE 1 928 261 A ist ein Wetterschutzdach in Form einer Zusatzdacheinrichtung für ein Kraftfahrzeug zum Schutz gegen Regen, Schnee oder dergleichen, bekannt, das an zwei gegenüberliegenden, zueinander parallelen Längsseiten des Fahrzeugs an auf dem Fahrzeugdach befestigten Trag- und Führungselementen im Wesentlichen in der Horizontalen längsverschiebbar herausziehbar und wieder einziehbar ist und das sich in seiner Auszieh- wie in seiner Einschiebstellung jeweils arretieren lässt.

Weitere Regendächer sind aus DE 10 2010 022 388 A1 ist ein Zeltdach für ein Campingzelt bekannt.

Es ist die Aufgabe der Erfindung, ein Wetterdach zu schaffen, das auf einfache Weise an einem mit Flügeltüren ausgestatteten Fahrzeug einsetzbar ist.

Erfindungsgemäß wird diese Aufgabe dadurch gelöst, dass das Wetterschutzdach zwischen den aufgeklappten Flügeltüren selbsttragend aufliegend ist.

Vorteilhafte Weiterbildungen der Erfindung ergeben sich aus den Unteransprüchen und der Beschreibung.

Vorzugsweise ist das Wetterschutzdach selbsttragend. Mit Vorteil lässt sich das Wetterschutzdach im nicht-benutzten Zustand auf der Unterseite des Fahrzeugdachs befestigen.

Vorzugsweise umfasst das Wetterschutzdach eine Mehrzahl von zusammenfaltbaren Elementen. Zusätzlich können mit Vorteil zwei seitliche Schutzelemente vorgesehen werden, die jeweils an beiden Längsseiten des Fahrzeugs zur Überdeckung eines zwischen der Seitenwand des Fahrzeugs und der geöffneten Flügeltür bestehenden offenen Zwischenraums ausbreitbar sind. Dadurch besteht auch ein Schutz gegen das seitliche Eindringen von Feuchtigkeit und gegen Wind.

Eine einfache Befestigungsform des Wetterschutzdachs besteht darin, dass es mittels Zurr- oder Gummibändern an Karosseriebauteilen des Kraftfahrzeugs, insbesondere an den Flügeltüren befestigt wird.

Ebenso lässt sich in vorteilhafter Weise vorsehen, dass es einen wenigstens im Wesentlichen mit den senkrechten Außenkanten der geöffneten Flügeltüren fluchtenden Vorhang umfasst. Der Vorhang ragt dabei nur über eine gewisse Länge von oben zwischen den Flügeltüren herunter, so dass es beispielsweise noch möglich ist, in das Fahrzeug einzusteigen, ohne den Vorhang beiseiteschieben oder anheben zu müssen. Der Vorhang besteht beispielsweise aus einem durchsichtigen Kunststoff. Er kann auch zur Aufnahme eines Verkehrsschilds ausgebildet sein.

Ein weiterer Vorteil des Wetterschutzdachs besteht darin, dass es die Flügeltüren im geöffneten Zustand fixiert und gegen das Verschließen sperrt.

Die Flügeltüren sind üblicherweise am Heck des Kraftfahrzeugs angeordnet. Sie können jedoch auch an einer Längsseite angebracht sein.

Ein besonderer Vorzug des erfindungsgemäßen Wetterschutzdachs besteht darin, dass es auch bei Niederschlägen einen trockenen Aufenthalt im Heckbereich im Inneren des Fahrzeugs ohne in das Fahrzeug infolge von Wind eindringende Nässe ermöglicht. Wenn das Fahrzeug einem Handwerksbetrieb als Transporter dient, wird auch die Ausführung von handwerklichen Arbeiten im Inneren des Fahrzeugs am Standort eines Kunden erleichtert. Die Hecktüren oder andere Flügeltüren können bei ausgebrachtem Wetterschutzdach offen stehen bleiben, während der Handwerker im Fahrzeuginnenraum Arbeiten verrichtet, ohne dass seine Werkzeuge oder sonstige Bauteile durch eindringende Nässe beschädigt werden oder korrodieren.

Auch der Innenraum des Fahrzeugs kann infolge eindringender Nässe korrodieren. Er selber kann Tätigkeiten im Innenraum ohne störende Nässe oder Feuchtigkeit vornehmen. Dadurch wird die Möglichkeit des Einsatzes des Fahrzeuginnenraums als Werkstatt verbessert. Wenn das Wetterschutzdach als Ganzes oder wenigstens teilweise, insbesondere in Verbindung mit einem ebenfalls lichtdurchlässigen, mit dem Wetterschutzdach verbundenen Vorhang, lichtdurchlässig ausgebildet ist, kann der Handwerker die Arbeiten ohne zusätzliche künstliche Beleuchtung durchführen.

Durch die Erfindung wird somit ein Wetterschutzdach geschaffen, das eine Benutzung des Fahrzeugs für handwerkliche Arbeiten im Inneren des Fahrzeugs erleichtert und den Feuchtigkeitseintrag durch Schnee oder Regen minimiert. Die Dachkonstruktion lässt sich innerhalb kürzester Zeit auf- und wieder abbauen. Sie lässt sich platzsparend im zusammengerollten oder zusammengefalteten Zustand im Inneren des Fahrzeugs oder in einer an einer der Flügeltüren angebrachten Tasche verstauen. Alternativ ist sie an der Unterseite des Fahrzeugdachs befestigt.

Nachstehend wird die Erfindung anhand eines Ausführungsbeispiels anhand der Zeichnungen näher erläutert. Es zeigen:
- Fig. 1: eine Draufsicht auf ein Wetterdach,
- Fig. 2: eine Seitenansicht des Wetterdachs im ausgeklappten Zustand,
- Fig. 3: eine Seitenansicht des Wetterdachs im zusammengeklappten Zustand und
- Fig. 4: einen Flügeltüren aufweisenden Transporter, der zusätzlich mit dem Wetterdach ausgestattet ist.

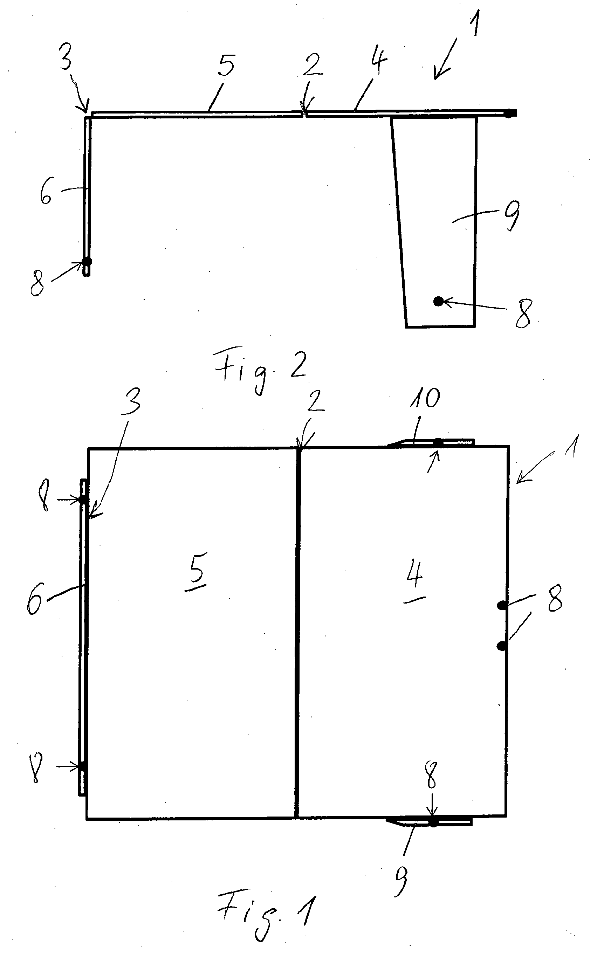

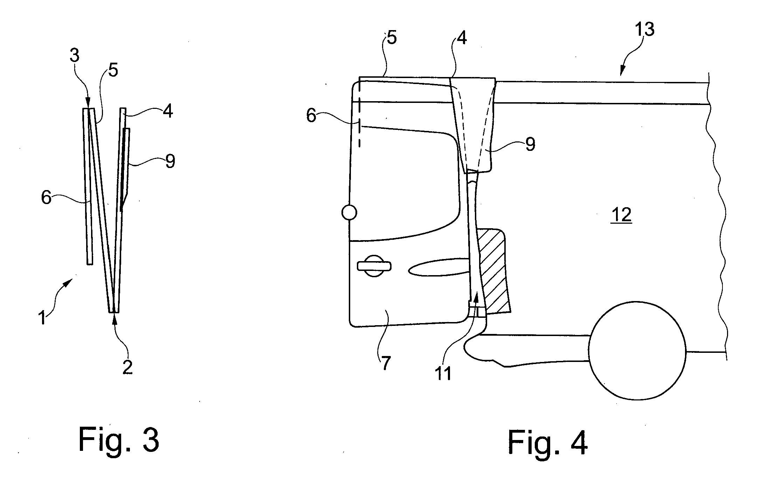

Ein faltbares Wetterdach 1 (Fig. 1 bis 3) umfasst durch zwei Falze 2, 3 oder Nuten voneinander getrennte Elemente 4 bis 6, die zusammenklappbar sind. Im benutzten Zustand sind die Elemente 4 und 5 flach nebeneinanderliegend angeordnet und bilden gemeinsam ein den Raum oberhalb geöffneter Flügeltüren 7 (Fig. 4) abschließendes Dach. Das Element 6 hängt etwa im rechten Winkel zu den Elementen 4 und 5 herunter und bildet einen Vorhang. Das Element 6 ist vorzugsweise aus einem durchsichtigen Material hergestellt.

An den Elementen 4 bis 6 sind jeweils Zurrpunkte 8 für Zurrgurte angebracht, die eine Befestigung der Elemente 4 bis 6 an der Karosserie des Fahrzeugs, insbesondere an dessen Innenraum und/oder an den Flügeltüren 7 ermöglichen.

Ferner sind seitliche Vorhänge 9, 10 mit dem Element 4 verbunden, die beispielsweise aus Stoffbahnen gebildet sind und sich ebenfalls zusammenfalten oder zusammenrollen lassen. Die Vorhänge 9, 10 überdecken wenigstens den oberen offenen Bereich 11, der zwischen den Längswänden 12 eines Transporters 13 entsteht, wenn die Flügeltüren 7 geöffnet sind. Die Vorhänge 9, 10 können jedoch auch bis an die untere Kante der Flügeltüren herunterhängen.

Anstelle von Zurrpunkten 8 lassen sich die Elemente 4 bis 6 und die Vorhänge 9, 10 auch durch verschiedene andere Befestigungsmittel mit der Karosserie des Transporters 13 und/oder mit den Flügeltüren 7 lösbar verbinden, beispielsweise durch Gummispanner, Ösen, Laschen, Schraubverbindungen, Magnetverschlüsse, Klettverbindungen und dergleichen.

## Patentansprüche

1. An einem mit Flügeltüren (7) ausgestatteten Kraftfahrzeug (13) angebrachtes oder anbringbares Wetterschutzdach (1) mit einer Dachfläche, **dadurch gekennzeichnet, dass** das Wetterschutzdach (1) zwischen den aufgeklappten Flügeltüren (7) aufspannbar ist.

2. Wetterschutzdach (1) nach Anspruch 1, **dadurch gekennzeichnet, dass** das Wetterschutzdach (1) selbsttragend ist.

3. Wetterschutzdach (1) nach Anspruch 1 oder 2, **dadurch gekennzeichnet, dass** es im nicht-benutzten Zustand auf der Unterseite des Fahrzeugdachs befestigt ist.

4. Wetterschutzdach (1) nach Anspruch 3, **dadurch gekennzeichnet, dass** es zur Benutzung direkt auf den aufgeklappten Flügeltüren auflegbar ist.

5. Wetterschutzdach (1) nach einem der Ansprüche 1 bis 4, **dadurch gekennzeichnet, dass** es zusammenfaltbare Elemente (4, 5, 6) umfasst.

6. Wetterschutzdach (1) nach Anspruch 5, **dadurch gekennzeichnet, dass** es zwei seitliche Schutzelemente (9) umfasst, die jeweils an beiden Längsseiten des Fahrzeugs (13) zur Überdeckung eines zwischen der Seitenwand (12) des Fahrzeugs (13) und der geöffneten Flügeltür (7) bestehenden offenen Zwischenraums (11) ausbreitbar sind.

7. Wetterschutzdach (1) nach einem der Ansprüche 1 bis 6, **dadurch gekennzeichnet, dass** es mittels Zurr- oder Gummibändern an Karosseriebauteilen des Kraftfahrzeugs (13), insbesondere an den Flügeltüren (7), befestigbar ist.

8. Wetterschutzdach (1) nach einem der Ansprüche 1 bis 7, **dadurch gekennzeichnet, dass** es einen wenigstens im Wesentlichen mit den senkrechten Außenkanten der geöffneten Flügeltüren (7) fluchtenden Vorhang (6) umfasst.

9. Wetterschutzdach (1) nach einem der Ansprüche 1 bis 8, **dadurch gekennzeichnet, dass** es die Flügeltüren (7) im geöffneten Zustand fixiert.
